# EUROPEAN PATENT SPECIFICATION

(11) **EP 3 096 224 B1**
(45) Date of publication and mention of the grant of the patent: **25.09.2019**
(21) Application number: 16165748.1
(22) Date of filing: 18.04.2016
(51) Int. Cl.: G06F 8/41, G06F 8/61, G06F 8/65, G06F 9/445, G06F 9/455

(54) **METHOD AND APPARATUS FOR PROCESSING APPLICATION INSTALLATION PACKAGE**
VERFAHREN UND VORRICHTUNG ZUR VERARBEITUNG EINES ANWENDUNGSINSTALLATIONSPAKETS
PROCÉDÉ ET APPAREIL DE TRAITEMENT DE PACKAGE D'INSTALLATION D'APPLICATION

(30) Priority: 22.05.2015 CN 201510266977
(43) Date of publication of application: 23.11.2016
(73) Proprietor: Xiaomi Inc., Beijing 100085 (CN)
(72) Inventor: WU, Junzhou, 100085 Beijing (CN); WANG, Shujie, 100085 Beijing (CN); SUN, Nian, 100085 Beijing (CN)
(74) Representative: Sackin, Robert

(56) References cited:
- EP-A2- 0 908 818
- Anonymous: "Configuring ART | Android Developers", , 8 April 2015 (2015-04-08), XP055305218, Retrieved from the Internet: URL:http://web.archive.org/web/20150408154 202/http://source.android.com/devices/tech /dalvik/configure.html [retrieved on 2016-09-23]
- DONG-HEON JUNG ET AL: "Hybrid compilation and optimization for java-based digital TV platforms", ACM TRANSACTIONS ON EMBEDDED COMPUTING SYSTEMS, ACM, NEW YORK, NY, US, vol. 13, no. 2s, 27 January 2014 (2014-01-27), pages 1-27, XP058043789, ISSN: 1539-9087, DOI: 10.1145/2506257

## Description

### TECHNICAL FIELD

The present disclosure relates to the field of mobile terminals, and more particularly, to a method and an apparatus for processing an application installation package.

### BACKGROUND

During system upgrade of the Android operating system, it is necessary to optimize the APK (AndroidPackage, or Android installation package - APK is a file format used in the Android installation package) on a mobile terminal. The APK is a package file format used by the Android operating system for distribution and installation of mobile applications and middleware. In 5.0 or later version of the Android system, the optimization process is usually to compile the APK installed on the mobile terminal into binary codes, so as to increase the execution efficiency of the codes.
"Configuring ART Android Developers", 8 April 2015 (2015-04-08), XP055305218, retrieved from the Internet; URL:http://web.archive.org/web/20150408154202/http://source.android.com/devices/tech/dalvik/co nfigure.html discloses how to configure Android (registered trade mark) runtime (ART). ART uses ahead of time compilation. This means that, at installation, dex code is compiled to native code in OAT files.

### SUMMARY

In order to solve the problem existing in the related art, the present disclosure provides a method and an apparatus for processing an application installation package. The technical solutions are as follows.

According to a first aspect of embodiments of the present disclosure, a method for processing an application installation package is provided, including:
acquiring a processing attribute of the application installation package when it is monitored that an operating system is being upgraded, the processing attribute being an upgrade compilation attribute or an idle compilation attribute; and
during upgrade of the operating system, compiling the application installation package whose processing attribute is the upgrade compilation attribute.

In one possible embodiment, said acquiring a processing attribute of the application installation package includes:
detecting individually whether the application installation package belongs to an upgrade compilation list;
if the application installation package does not belong to the upgrade compilation list, detecting whether a time period between the latest use time instant of the application installation package and a current time instant exceeds a preset time period;
if the time period exceeds the preset time period, determining that the processing attribute of the application installation package is the idle compilation attribute; and
if the application installation package belongs to the upgrade compilation list or the time period does not exceed the preset time period, determining that the processing attribute of the application installation package is the upgrade compilation attribute.

In one possible embodiment, the method further includes:
detecting whether a current operation state satisfies an idle compilation condition; and
if the current operation state satisfies the idle compilation condition, compiling the application installation package whose processing attribute is the idle compilation attribute.

In one possible embodiment, the idle compilation condition includes at least one of the following conditions:
a current time instant falls within an idle time period;
a current battery power exceeds a preset threshold;
a current state is a battery charging state; and
no operating signal is received in a most recent time period.

In one possible embodiment, the method further includes:
receiving a start signal which corresponds to the application installation package;
detecting whether the application installation package is an application installation package which is not compiled and the processing attribute of which is the idle compilation attribute; and
if the application installation package is an application installation package which is not compiled and the processing attribute of which is the idle compilation attribute, compiling the application installation package, and starting to install the application installation package after the compiling is completed.

In one possible embodiment, the method further includes:
presetting the processing attribute of the application installation package based on an importance level of the application installation package.

According to a second aspect of the present disclosure, an apparatus for processing an application installation package is provided, including:
an acquiring module, configured to acquire a processing attribute of the application installation package when it is monitored that an operating system is being upgraded, the processing attribute being an upgrade compilation attribute or an idle compilation attribute; and
a compiling module, configured to, during upgrade of the operating system, compile the application installation package whose processing attribute is the upgrade compilation attribute.

In one possible embodiment, the acquiring module includes:
a first detect submodule, configured to detect individually whether the application installation package to be compiled belongs to an upgrade compilation list;
a second detect submodule, configured to, when the application installation package does not belong to the upgrade compilation list, detect whether a time period between the latest use time instant of the application installation package and a current time instant exceeds a preset time period;
an idleness determining submodule, configured to, when the time period exceeds the preset time period, determine that the processing attribute of the application installation package is the idle compilation attribute; and
an upgrade determining submodule, configured to, when the application installation package belongs to the upgrade compilation list or the time period does not exceed the preset time period, determine that the processing attribute of the application installation package is the upgrade compilation attribute.

In one possible embodiment, the apparatus further includes:
an idleness detect module, configured to detect whether a current operation state satisfies an idle compilation condition; and
an idleness compiling module, configured to, when the current operation state satisfies the idle compilation condition, compile the application installation package whose processing attribute is the idle compilation attribute.

In one possible embodiment, the idle compilation condition includes at least one of the following conditions:
a current time instant falls within an idle time period;
a current battery power exceeds a preset threshold;
a current state is a battery charging state; and
no operating signal is received in a most recent time period.

In one possible embodiment, the apparatus further includes:
a signal receiving module, configured to receive a start signal which corresponds to the application installation package;
a fourth detect module, configured to detect whether the application installation package is an application installation package which is not compiled and the processing attribute of which is the idle compilation attribute; and
a compiling and starting module, configured to, when the application installation package is an application installation package which is not compiled and the processing attribute of which is the idle compilation attribute, compile the application installation package, and start to install the application installation package after the compiling is completed.

In one possible embodiment, the apparatus further includes:
a setting module, configured to preset the processing attribute of the application installation package based on an importance level of the application installation package.

According to a third aspect of the present disclosure, an apparatus for processing an application installation package is provided, including:
a processor; and
a memory for storing instructions executable by the processor;
wherein the processor is configured to:
acquire a processing attribute of the application installation package when it is monitored that an operating system is being upgraded, the processing attribute being an upgrade compilation attribute or an idle compilation attribute; and
during upgrade of the operating system, compile the application installation package whose processing attribute is the upgrade compilation attribute.

According to a fourth aspect of the present disclosure, there is provided a computer program which, when being executed on a processor of an apparatus, performs any of the above methods.

The technical solutions provided in the embodiments of the present disclosure may achieve the following beneficial effects.

Necessary application installation packages are compiled during upgrade, which solves the problem that the upgrade process takes too long time, so as to greatly shorten time-consuming of the upgrade and meanwhile guarantee the user's normal use of the application installation packages, and improve the user experience.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a flowchart illustrating a method for processing an application installation package according to an exemplary embodiment;
FIG. 2 is a flowchart illustrating a method for processing an application installation package according to another exemplary embodiment;
FIG. 3A to FIG. 3C are diagrams respectively illustrating an interface when the method for processing an application installation package provided by the embodiment of FIG. 2 is in implementing;
FIG. 4 is a block diagram illustrating an apparatus for processing an application installation package according to an exemplary embodiment;
FIG. 5 is a block diagram illustrating an apparatus for processing an application installation package according to another exemplary embodiment; and
FIG. 6 is a block diagram illustrating an apparatus for processing an application installation package according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The mobile terminal herein may be a mobile phone, a tablet computer, an e-book reader, an MP3 player (Moving Picture Experts Group Audio Layer III), an MP4 (Moving Picture Experts Group Audio Layer IV 4) player, a portable laptop computer, and the like.

During the upgrade of an operating system, since the user may install dozens of APKs in the mobile terminal, and the compilation process of each APK takes a few seconds to several minutes, so when all of APKs are compiled, it will cause that the entire upgrade process takes a relatively long time. In a mobile phone with a low hardware configuration, the entire upgrade process will last tens of minutes.

APK files are an archive file. That is, they are composed of at least one computer file as well as metadata

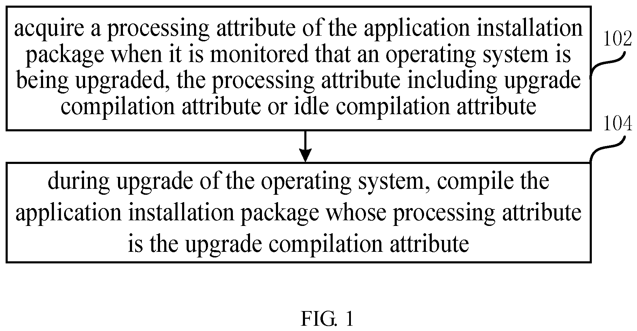

FIG. 1 is a flowchart illustrating a method for processing an application installation package (in this example, an APK) according to an exemplary embodiment. The present embodiment is exemplified when the method for processing an application installation package is applied in a mobile terminal. The method includes the following steps.

In step 102, a processing attribute of the application installation package or APK is acquired when it is monitored that an operating system is being upgraded, the processing attribute including an upgrade compilation attribute or an idle compilation attribute.

The operating system may be the Android operating system.

In step 104, during upgrade of the operating system, the application installation package or APK whose processing attribute is the upgrade compilation attribute is compiled.

To sum up, by the application compiling method as provided by the present embodiment, compilation processes of some application installation packages are skipped during upgrade, thereby to solve the problem that the upgrade will take too long time when all of application installation packages are compiled during upgrade, and achieves the effects of shortening time-consuming of the upgrade and meanwhile not affecting the user's normal use of the application installation packages.

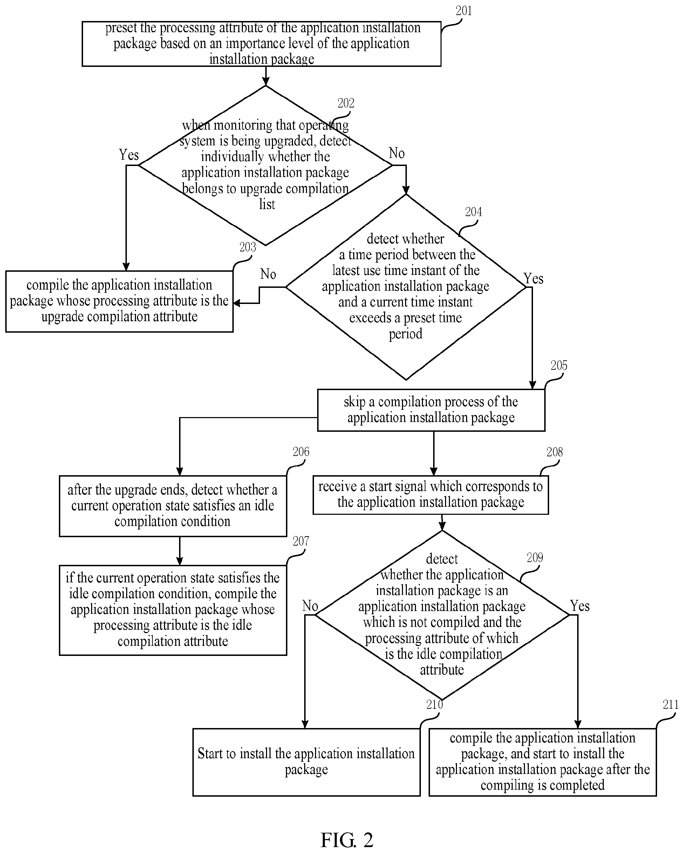

FIG. 2 is a flowchart illustrating a method for processing an application installation package according to another exemplary embodiment. The present embodiment is exemplified when the method for processing an application installation package is applied in a mobile terminal. The method includes the following steps.

In step 201, a processing attribute of the application installation package is preset based on an importance level of the application installation package.

In the present embodiment, the mobile terminal is a terminal on which the Android operating system is running. The application installation package is an apk.

The processing attribute includes an upgrade compilation attribute or an idle compilation attribute. The upgrade compilation attribute refers to an attribute in which the application installation package needs to be compiled during upgrade; the idle compilation attribute refers to an attribute in which the application installation package temporarily needs not to be compiled during upgrade.

The importance level of the application installation package may be preset by the system, or be set by the user. Optionally, the application installation packages necessary for system running and the application installation packages commonly used by the user are set as high priority level; the application installation packages unnecessary for system running and the application installation packages not commonly used by the user are set as low priority level. The use frequency of the application installation package, or the time duration from the time instant of the latest use of the application installation package to the current time instant, may be used to indicate whether the application installation package is commonly used by the user.

For the application installation packages with high priority level, the processing attribute may be set as the upgrade compilation attribute;

For the application installation packages with low priority level, the processing attribute may be set as the idle compilation attribute.

The processing attribute may be a static attribute, or may be an attribute dynamically detected by the mobile terminal.

When the processing attribute is an attribute dynamically detected by the mobile terminal, the step 201 optionally includes the following two steps.

First, the mobile terminal receives a first setting signal, and generates or modifies an upgrade compilation list based on the first setting signal.

The user may trigger the first setting signal in the mobile terminal. The first setting signal may be a signal selected in an APK list.

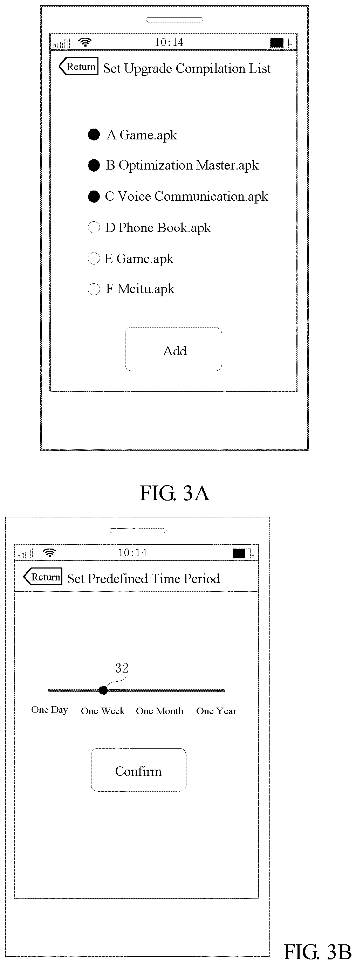

For example, as shown in FIG. 3A, the user selects "A Game.apk, B Optimization Master.apk, C Voice Communication.apk" to be added to the upgrade compilation list. The upgrade compilation list is a list of application installation packages whose processing attributes are the upgrade compilation attributes.

When the upgrade compilation list does not exist initially, the mobile terminal generates an upgrade compilation list based on the first setting signal; when the upgrade compilation list exists initially, the mobile terminal modifies the upgrade compilation list based on the first setting signal.

Optionally, an initial upgrade compilation list is preset by the operating system.

Second, the mobile terminal receives a second setting signal, and generates or modifies a preset time period based on the second setting signal.

The preset time period is a threshold for judging whether an application installation package is a commonly used application installation package. The user may trigger the second setting signal in the mobile terminal. The second setting signal may be a signal slidably selected in a duration slider.

For example, as shown in FIG. 3B, the user slides a sliding button 32 in a duration slider, and sets a preset time period as 7 days. The preset time period is a threshold for judging whether an application installation package is a commonly used application installation package.

When the preset time period does not exist initially, the mobile terminal generates a preset time period based on the second setting signal; when the preset time period exists initially, the mobile terminal modifies the preset time period based on the second setting signal.

Optionally, an initial preset time period is preset by the operating system.

In step 202, when it is monitored that an operating system is being upgraded, whether the application installation package belongs to an upgrade compilation list is detected individually.

When the APKs need to be compiled during the upgrade, in the mobile terminal there are n application installation packages to be compiled, where n is a positive integer.

If the application installation packages built in the operating system have been compiled in a server, the n application installation packages to be compiled include: third-party application installation packages installed by the user him/herself.

If the application installation packages built in the operating system have not been compiled in a server, the n application installation packages to be compiled include: the application installation packages built in the operating system, and third-party application installation packages installed by the user him/herself.

For the n application installation packages to be compiled, the mobile terminal detects individually whether the application installation package to be compiled belongs to an upgrade compilation list.

If belonging to the upgrade compilation list, proceed to step 203; if not belonging to the upgrade compilation list, proceed to step 204.

In step 203, the application installation package whose processing attribute is the upgrade compilation attribute is compiled.

When the application installation package belongs to the upgrade compilation list, the mobile terminal determines that the processing attribute of the application installation package is the upgrade compilation attribute, and compiles the application installation package into a binary codes file which has a higher execution efficiency.

In step 204, it is detected whether a time period between the latest use time instant of the application installation package and a current time instant exceeds a preset time period.

If not exceeding the preset time period, then the application installation package is a commonly used application installation package, and the mobile terminal determines that the processing attribute of the application installation package is the upgrade compilation attribute; the method proceeds to step 203.

If exceeding the preset time period, then the mobile terminal determines that the processing attribute of the application installation package is the idle compilation attribute; the method proceeds to step 205.

In step 205, a compilation process of the application installation package is skipped.

After all of the n application installation packages have been detected, the mobile terminal ends the upgrade.

In step 206, after the upgrade ends, it is detected whether a current operation state satisfies an idle compilation condition.

During normal use after the upgrade ends, the mobile terminal may detect whether a current operation state satisfies an idle compilation condition. The idle compilation condition includes at least one of the following conditions:
a current time instant falls within an idle time period;
a current battery power exceeds a preset threshold;
a current state is a battery charging state; and
no operating signal is received in a most recent time period.

For example, the idle compilation condition is: the current time instant falls within 11:30 pm to 6:00 am, and the current battery power exceeds 50%, and no operating signal is received in the last 10 minutes.

In step 207, if the current operation state satisfies the idle compilation condition, the application installation package whose processing attribute is the idle compilation attribute is compiled.

When the idle compilation condition is conformed, the mobile terminal proceeds to compile the application installation package whose processing attribute is the idle compilation attribute. If the idle compilation condition is not conformed, the mobile terminal maintains the current operation state.

It is to be noted that, if an operating signal is received during the compiling, then after the application installation package which is currently under compilation is compiled, the mobile terminal temporarily suspends the compilation of other application installation packages that have not been compiled, and waits for the next timing which satisfies the idle compilation condition, to proceed to compile.

It is to be further noted that, step 206 and step 207 are optional steps.

In step 208, a start signal which corresponds to the application installation package is received.

After the upgrade ends, the user may also manually start to install the application installation package.

In step 209, it is detected whether the application installation package is an application installation package which is not compiled and the processing attribute of which is the idle compilation attribute.

In step 210, if the application installation package is one that has been compiled, then the application installation package is started to be installed.

In step 211, if the application installation package is an application installation package which is not compiled and the processing attribute of which is the idle compilation attribute, then the application installation package is compiled, and the application installation package is started to be installed after the compiling is completed.

Optionally, during compiling the application installation package, the mobile terminal may display a guide interface, which is used to prompt the user to wait for the completion of the compiling.

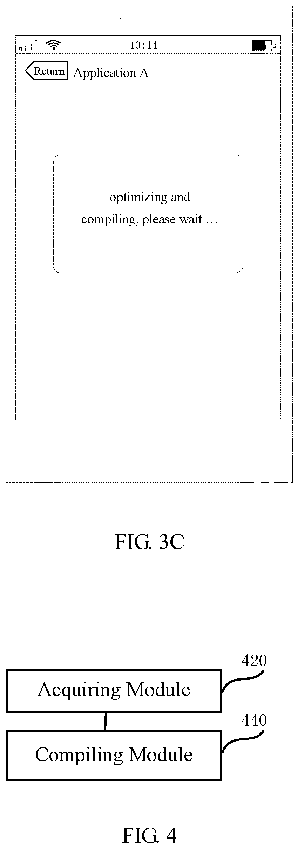

For example, as shown in FIG. 3C, during compiling, the mobile terminal displays a dialog box 34, in which a prompt message "optimizing and compiling, please wait ..." is displayed.

To sum up, in the method for processing an application installation package as provided by the present embodiment, necessary application installation packages are compiled during upgrade, which solves the problem that the upgrade process takes too long time, so as to greatly shorten time-consuming of the upgrade and meanwhile guarantee the user's normal use of the application installation packages, and improve the user experience.

In the method for processing an application installation package as provided by the present embodiment, when the current operation state of the mobile terminal satisfies the idle compilation condition, the mobile terminal proceeds to automatically compile the application installation packages whose processing attributes are the idle compilation attribute, thereby to solve the problem that the application installation packages skipped during upgrade cannot operate normally, and achieve the effects of sufficiently using the idle time of the mobile terminal and improving resource utilization rate.

In the method for processing an application installation package as provided by the present embodiment, when the user needs to use the application installation package, if the current application installation package is an application installation package which is not compiled and the processing attribute of which is the idle compilation attribute, then the application installation package is compiled instantly; since the time-consuming for compiling a single application installation package is very limited, the user's use of the application installation package will not be affected.

Apparatus embodiments of the present disclosure are described hereinafter, wherein the apparatuses may be used to perform the method embodiments of the present disclosure. Details that are not disclosed in the apparatus embodiments of the present disclosure, reference may be made to the method embodiments of the present disclosure.

FIG. 4 is a block diagram illustrating an apparatus for processing an application installation package according to an exemplary embodiment. As shown in FIG. 4, the apparatus for processing an application installation package may be implemented via software, hardware or a combination of software and hardware as all or a part of a mobile terminal. The apparatus for processing an application installation package includes but not limited to:
an acquiring module 420, configured to acquire a processing attribute of the application installation package when it is monitored that an operating system is being upgraded, the processing attribute being an upgrade compilation attribute or an idle compilation attribute; and
a compiling module 440, configured to, during upgrade of the operating system, compile the application installation package whose processing attribute is the upgrade compilation attribute.

To sum up, in the apparatus for processing an application installation package as provided by the present embodiment, necessary application installation packages are compiled during upgrade, which solves the problem that the upgrade process takes too long time, so as to greatly shorten time-consuming of the upgrade and meanwhile guarantee the user's normal use of the application installation packages, and improve the user experience.

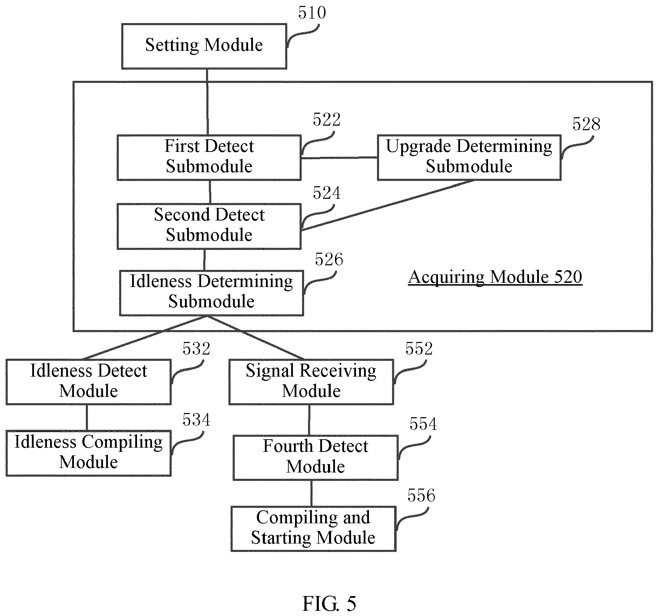

FIG. 5 is a block diagram illustrating an apparatus for processing an application installation package according to an exemplary embodiment. As shown in FIG. 5, the apparatus for processing an application installation package may be implemented via software, hardware or a combination of software and hardware as all or a part of a mobile terminal. The apparatus for processing an application installation package includes but not limited to:
an acquiring module 520, configured to acquire a processing attribute of the application installation package when it is monitored that an operating system is being upgraded, the processing attribute being an upgrade compilation attribute or an idle compilation attribute; and
a compiling module 540, configured to, during upgrade of the operating system, compile the application installation package whose processing attribute is the upgrade compilation attribute.

Optionally, the acquiring module 520 includes:
a first detect submodule 522, configured to detect individually whether the application installation package to be compiled belongs to an upgrade compilation list;
a second detect submodule 524, configured to, when the application installation package does not belong to the upgrade compilation list, detect whether a time period between the latest use time instant of the application installation package and a current time instant exceeds a preset time period;
an idleness determining submodule 526, configured to, when the time period exceeds the preset time period, determine that the processing attribute of the application installation package is the idle compilation attribute; and
an upgrade determining submodule 528, configured to, when the application installation package belongs to the upgrade compilation list or the time period does not exceed the preset time period, determine that the processing attribute of the application installation package is the upgrade compilation attribute.

Optionally, the apparatus further includes:
an idleness detect module 532, configured to detect whether a current operation state satisfies an idle compilation condition; and
an idleness compiling module 534, configured to, when the current operation state satisfies the idle compilation condition, compile the application installation package whose processing attribute is the idle compilation attribute.

Optionally, the idle compilation condition includes at least one of the following conditions:
a current time instant falls within an idle time period;
a current battery power exceeds a preset threshold;
a current state is a battery charging state; and
no operating signal is received in a most recent time period.

Optionally, the apparatus further includes:
a signal receiving module 552, configured to receive a start signal which corresponds to the application installation package;
a fourth detect module 554, configured to detect whether the application installation package is an application installation package which is not compiled and the processing attribute of which is the idle compilation attribute; and
a compiling and starting module 556, configured to, when the application installation package is an application installation package which is not compiled and the processing attribute of which is the idle compilation attribute, compile the application installation package, and start to install the application installation package after the compiling is completed.

Optionally, the apparatus further includes:
a setting module 510, configured to preset the processing attribute of the application installation package based on an importance level of the application installation package.

To sum up, in the apparatus for processing an application installation package as provided by the present embodiment, necessary application installation packages are compiled during upgrade, which solves the problem that the upgrade process takes too long time, so as to greatly shorten time-consuming of the upgrade and meanwhile guarantee the user's normal use of the application installation packages, and improve the user experience.

In the apparatus for processing an application installation package as provided by the present embodiment, when the current operation state of the mobile terminal satisfies the idle compilation condition, the mobile terminal proceeds to automatically compile the application installation packages whose processing attributes are the idle compilation attribute, thereby to solve the problem that the application installation packages skipped during upgrade cannot operate normally, and achieve the effects of sufficiently using the idle time of the mobile terminal and improving resource utilization rate.

In the apparatus for processing an application installation package as provided by the present embodiment, when the user needs to use the application installation package, if the current application installation package is an application installation package which is not compiled and the processing attribute of which is the idle compilation attribute, then the application installation package is compiled instantly; since the time-consuming for compiling a single application installation package is very limited, the user's use of the application installation package will not be affected.

With respect to the apparatuses in the above embodiments, the specific implementations of operations executed by various modules thereof have been in detail described in the embodiments illustrating the methods, which are not described herein any further.

An exemplary embodiment of the present disclosure provides an apparatus for processing an application installation package, including: a processor; and a memory for storing instructions executable by the processor;
wherein the processor is configured to:
acquire a processing attribute of the application installation package when it is monitored that an operating system is being upgraded, the processing attribute being an upgrade compilation attribute or an idle compilation attribute; and
during upgrade of the operating system, compile the application installation package whose processing attribute is the upgrade compilation attribute.

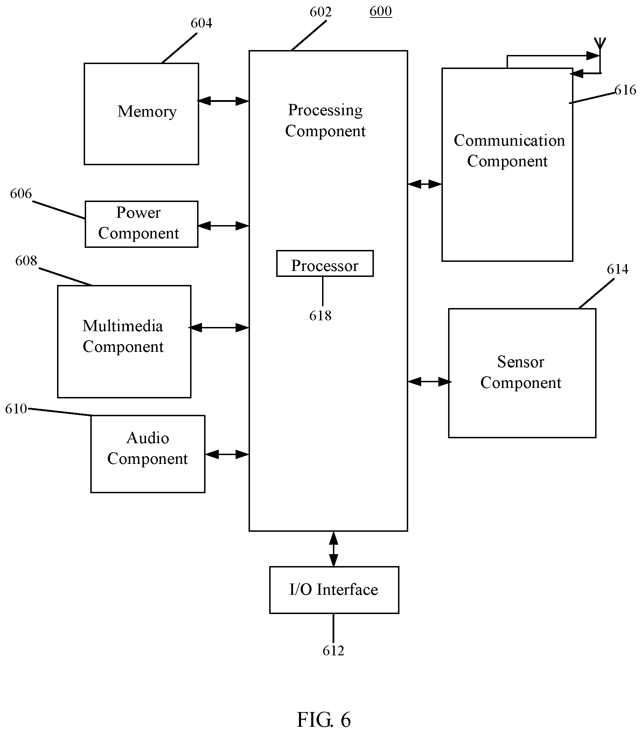

FIG. 6 is a block diagram illustrating an apparatus for processing an application installation package according to an exemplary embodiment. For example, the apparatus 600 may be a mobile phone, a computer, a digital broadcast terminal, a messaging device, a gaming console, a tablet, a medical device, exercise equipment, a personal digital assistant, and the like.

Referring to FIG. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 618 to execute instructions to perform all or a part of the steps in the above-described methods. In addition, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operations of the apparatus 600. Examples of such data include instructions for any application or method operated on the apparatus 600, contact data, phonebook data, messages, pictures, videos, and the like. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power supplies, and other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive external multimedia data while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, or a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and a peripheral interface module, such as a keyboard, a click wheel, a button, or the like. The buttons may include, but are not limited to, a home button, a volume button, a starting button, and a locking button.

The sensor component 614 includes one or more sensors to provide status assessments of various aspects of the apparatus 600. For example, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communications, wired or wirelessly, between the apparatus 600 and other devices. The apparatus 600 may access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 604, executable by the processor 618 in the apparatus 600, for performing the above-described methods for compiling applications. For example, the non-transitory computer-readable storage medium may be a ROM, a random access memory (RAM), a compact disc read-only memory (CD-ROM), a magnetic tape, a floppy disc, an optical data storage device, or the like.

There is provided a non-transitory computer-readable storage medium having stored therein instructions that, when executed by a processor of a mobile terminal, cause the mobile terminal to perform a method for processing an application installation package, including:
acquiring a processing attribute of the application installation package when it is monitored that an operating system is being upgraded, the processing attribute being an upgrade compilation attribute or an idle compilation attribute; and
during upgrade of the operating system, compiling the application installation package whose processing attribute is the upgrade compilation attribute.

Optionally, said acquiring a processing attribute of the application installation package includes:
detecting individually whether the application installation package belongs to an upgrade compilation list;
if the application installation package does not belong to the upgrade compilation list, detecting whether a time period between the latest use time instant of the application installation package and a current time instant exceeds a preset time period;
if the time period exceeds the preset time period, determining that the processing attribute of the application installation package is the idle compilation attribute; and
if the application installation package belongs to the upgrade compilation list or the time period does not exceed the preset time period, determining that the processing attribute of the application installation package is the upgrade compilation attribute.

Optionally, the method further includes:
detecting whether a current operation state satisfies an idle compilation condition; and
if the current operation state satisfies the idle compilation condition, compiling the application installation package whose processing attribute is the idle compilation attribute.

Optionally, the idle compilation condition includes at least one of the following conditions:
a current time instant falls within an idle time period;
a current battery power exceeds a preset threshold;
a current state is a battery charging state; and
no operating signal is received in a most recent time period.

Optionally, the method further includes:
receiving a start signal which corresponds to the application installation package;
detecting whether the application installation package is an application installation package which is not compiled and the processing attribute of which is the idle compilation attribute; and
if the application installation package is an application installation package which is not compiled and the processing attribute of which is the idle compilation attribute, compiling the application installation package, and starting to install the application installation package after the compiling is completed.

Optionally, the method further includes:
presetting the processing attribute of the application installation package based on an importance level of the application installation package.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope of the present invention being indicated by the appended claims.

It will be appreciated that the present invention is not limited to the exact construction that has been described above and illustrated in the accompanying drawings, and that various modifications and changes can be made without departing from the scope thereof. The scope of the present invention is only defined by the appended claims.

## Claims

1. A method for processing n application installation packages in an apparatus, where n is a positive integer, the method comprising:
acquiring (102) a processing attribute of the application installation packages when it is monitored that an operating system is being upgraded with a plurality of application installation packages, the processing attribute being an upgrade compilation attribute or an idle compilation attribute, wherein the upgrade compilation attribute refers to an attribute in which the application installation package needs to be compiled during upgrade and wherein the idle compilation attribute refers to an attribute in which the application installation package needs not to be compiled during upgrade;
during upgrade of the operating system, compiling (104) the application installation packages whose processing attribute is the upgrade compilation attribute; detecting (209) whether an application installation package is an application installation package which is not compiled and the processing attribute of which is the idle compilation attribute; and if the application installation package is an application installation package which is not compiled and the processing attribute of which is the idle compilation attribute, compiling (211) the application installation package, and, after the upgrade ends, starting to install the application installation package if a current operation state of the apparatus satisfies an idle compilation condition, wherein the idle compilation condition comprises at least one of the following conditions:
a current time instant falls within an idle time period;
a current battery power exceeds a preset threshold;
a current state is a battery charging state; and
no operating signal is received in a most recent time period.

2. The method according to claim 1, wherein said acquiring (102) a processing attribute of the application installation package comprises:
detecting (202) individually whether the application installation package belongs to an upgrade compilation list;
if the application installation package does not belong to the upgrade compilation list, detecting (204) whether a time period between the latest use time instant of the application installation package and a current time instant exceeds a preset time period;
if the time period exceeds the preset time period, determining that the processing attribute of the application installation package is the idle compilation attribute; and
if the application installation package belongs to the upgrade compilation list or the time period does not exceed the preset time period, determining that the processing attribute of the application installation package is the upgrade compilation attribute.

3. An apparatus for processing n application installation packages, where n is a positive integer, the apparatus comprising:
an acquiring module (420, 520), configured to acquire a processing attribute of the application installation packages when it is monitored that an operating system is being upgraded with a plurality of application installation packages, the processing attribute being an upgrade compilation attribute or an idle compilation attribute, wherein the upgrade compilation attribute refers to an attribute in which the application installation package needs to be compiled during upgrade and wherein the idle compilation attribute refers to an attribute in which the application installation package needs not to be compiled during upgrade; and
a compiling module (440), configured to, during upgrade of the operating system, compile the application installation packages whose processing attribute is the upgrade compilation attribute, wherein the apparatus further comprises:
a detect module (554), configured to detect whether an application installation package is an application installation package which is not compiled and the processing attribute of which is the idle compilation attribute; and
a compiling and starting module (556), configured to, when the application installation package is an application installation package which is not compiled and the processing attribute of which is the idle compilation attribute, compile the application installation package, and, after the upgrade ends, start to install the application installation package after the compiling is complete if a current operation state of the apparatus satisfies an idle compilation condition, wherein the idle compilation condition comprises at least one of the following conditions:
a current time instant falls within an idle time period;
a current battery power exceeds a preset threshold;
a current state is a battery charging state; and
no operating signal is received in a most recent time period.

4. The apparatus according to claim 3, wherein the acquiring module (520) comprises:
a first detect submodule (522), configured to detect individually whether the application installation package to be compiled belongs to an upgrade compilation list;
a second detect submodule (524), configured to, when the application installation package does not belong to the upgrade compilation list, detect whether a time period between the latest use time instant of the application installation package and a current time instant exceeds a preset time period;
an idleness determining submodule (526), configured to, when the time period exceeds the preset time period, determine that the processing attribute of the application installation package is the idle compilation attribute; and
an upgrade determining submodule (528), configured to, when the application installation package belongs to the upgrade compilation list or the time period does not exceed the preset time period, determine that the processing attribute of the application installation package is the upgrade compilation attribute.

5. A computer program which, when being executed on a processor of an apparatus, performs a method according to claim 1 or claim 2.

## Patentansprüche

1. Verfahren zur Verarbeitung von n Anwendungsinstallationspaketen in einer Vorrichtung, wobei n eine positive Ganzzahl ist, wobei das Verfahren Folgendes aufweist:
Erfassen eines Verarbeitungsattributs der Anwendungsinstallationspakete, wenn beobachtet wird, dass ein Betriebssystem mit mehreren Anwendungsinstallationspaketen aufgerüstet wird, wobei das Verarbeitungsattribut ein Aufrüstungskompilierungsattribut oder ein Leerlaufkompilierungsattribut ist, wobei sich das Aufrüstungskompilierungsattribut auf ein Attribut bezieht, bei dem das Anwendungsinstallationspaket während der Aufrüstung kompiliert werden muss, und wobei sich das Leerlaufkompilierungsattribut auf ein Attribut bezieht, bei dem das Anwendungsinstallationspaket während der Aufrüstung nicht kompiliert werden muss;
während der Aufrüstung des Betriebssystems Kompilieren (104) der Anwendungsinstallationspakete, deren Verarbeitungsattribut das Aufrüstungskompilierungsattribut ist; Erkennen (209), ob ein Anwendungsinstallationspaket ein Anwendungsinstallationspaket ist, das nicht kompiliert wird und dessen Verarbeitungsattribut das Leerlaufkompilierungsattribut ist; und, falls das Anwendungsinstallationspaket ein Anwendungsinstallationspaket ist, das nicht kompiliert wird und dessen Verarbeitungsattribut das Leerlaufkompilierungsattribut ist, Kompilieren (211) des Anwendungsinstallationspakets und nach Ende der Aufrüstung Starten des Installierens des Anwendungsinstallationspakets, falls ein aktueller Betriebszustand der Vorrichtung eine Leerlaufkompilierungsbedingung erfüllt, wobei die Leerlaufkompilierungsbedingung wenigstens eine der folgenden Bedingungen aufweist:
ein aktueller Zeitpunkt fällt in eine Leerlaufzeitspanne;
eine aktuelle Batterieleistung überschreitet eine voreingestellte Schwelle;
ein aktueller Zustand ist ein Batterieladezustand und
in einer jüngsten Zeitspanne wird kein Betriebssignal empfangen.

2. Verfahren nach Anspruch 1, wobei das genannte Erfassen (102) eines Verarbeitungsattributs des Anwendungsinstallationspakets Folgendes aufweist:
einzelnes Erkennen (202), ob das Anwendungsinstallationspaket zu einer Aufrüstungskompilierungsliste gehört;
falls das Anwendungsinstallationspaket nicht zu der Aufrüstungskompilierungsliste gehört, Erkennen (204), ob eine Zeitspanne zwischen dem letzten Nutzungszeitpunkt des Anwendungsinstallationspakets und einem aktuellen Zeitpunkt eine voreingestellte Zeitspanne überschreitet;
falls die Zeitspanne die voreingestellte Zeitspanne überschreitet, Bestimmen, dass das Verarbeitungsattribut des Anwendungsinstallationspakets das Leerlaufkompilierungsattribut ist; und,
falls das Anwendungsinstallationspaket zu der Aufrüstungskompilierungsliste gehört oder die Zeitspanne die voreingestellte Zeitspanne nicht überschreitet, Bestimmen, dass das Verarbeitungsattribut des Anwendungsinstallationspakets das Aufrüstungskompilierungsattribut ist.

3. Vorrichtung zur Verarbeitung von n Anwendungsinstallationspaketen, wobei n eine positive Ganzzahl ist, wobei die Vorrichtung Folgendes aufweist:
ein Erfassungsmodul (420, 520), das konfiguriert ist zum Erfassen eines Verarbeitungsattributs der Anwendungsinstallationspakete, wenn beobachtet wird, dass ein Betriebssystem mit mehreren Anwendungsinstallationspaketen aufgerüstet wird, wobei das Verarbeitungsattribut ein Aufrüstungskompilierungsattribut oder ein Leerlaufkompilierungsattribut ist, wobei sich das Aufrüstungskompilierungsattribut auf ein Attribut bezieht, bei dem das Anwendungsinstallationspaket während der Aufrüstung kompiliert werden muss, und wobei sich das Leerlaufkompilierungsattribut auf ein Attribut bezieht, bei dem das Anwendungsinstallationspaket während der Aufrüstung nicht kompiliert werden muss; und
ein Kompilierungsmodul (440), das konfiguriert ist zum Kompilieren der Anwendungsinstallationspakete, deren Verarbeitungsattribut das Aufrüstungskompilierungsattribut ist, während der Aufrüstung des Betriebssystems, wobei die Vorrichtung ferner Folgendes aufweist:
ein Erkennungsmodul (554), das konfiguriert ist zum Erkennen, ob ein Anwendungsinstallationspaket ein Anwendungsinstallationspaket ist, das nicht kompiliert wird und dessen Verarbeitungsattribut das Leerlaufkompilierungsattribut ist; und
ein Kompilierungs- und Startmodul (556), das konfiguriert ist zum Kompilieren des Anwendungsinstallationspakets, wenn das Anwendungsinstallationspaket ein Anwendungsinstallationspaket ist, das nicht kompiliert wird und dessen Verarbeitungsattribut das Leerlaufkompilierungsattribut ist, und nach Ende der Aufrüstung zum Starten des Installierens des Anwendungsinstallationspakets nach Abschluss des Kompilierens, falls ein aktueller Betriebszustand der Vorrichtung eine Leerlaufkompilierungsbedingung erfüllt, wobei die Leerlaufkompilierungsbedingung wenigstens eine der folgenden Bedingungen aufweist:
ein aktueller Zeitpunkt fällt in eine Leerlaufzeitspanne;
eine aktuelle Batterieleistung überschreitet eine voreingestellte Schwelle;
ein aktueller Zustand ist ein Batterieladezustand und in einer jüngsten Zeitspanne wird kein Betriebssignal empfangen.

4. Vorrichtung nach Anspruch 3, wobei das Erfassungsmodul (520) Folgendes aufweist:
ein erstes Erkennungsuntermodul (522), das konfiguriert ist zum einzelnen Erkennen, ob das zu kompilierende Anwendungsinstallationspaket zu einer Aufrüstungskompilierungsliste gehört;
ein zweites Erkennungsuntermodul (524), das konfiguriert ist zum Erkennen, wenn das Anwendungsinstallationspaket nicht zu der Aufrüstungskompilierungsliste gehört, ob eine Zeitspanne zwischen dem letzten Nutzungszeitpunkt des Anwendungsinstallationspakets und einem aktuellen Zeitpunkt eine voreingestellte Zeitspanne überschreitet;
ein Leerlaufbestimmungsuntermodul (526), das konfiguriert ist zum Bestimmen, wenn die Zeitspanne die voreingestellte Zeitspanne überschreitet, dass das Verarbeitungsattribut des Anwendungsinstallationspakets das Leerlaufkompilierungsattribut ist; und
ein Aufrüstungsbestimmungsuntermodul (528), das konfiguriert ist zum Bestimmen, wenn das Anwendungsinstallationspaket zu der Aufrüstungskompilierungsliste gehört oder die Zeitspanne die voreingestellte Zeitspanne nicht überschreitet, dass das Verarbeitungsattribut des Anwendungsinstallationspakets das Aufrüstungskompilierungsattribut ist.

5. Computerprogramm, das bei Ausführung in einem Prozessor einer Vorrichtung ein Verfahren nach Anspruch 1 oder Anspruch 2 durchführt.

## Revendications

1. Procédé de traitement d'un progiciel d'installation d'application dans un appareil, où n est un entier positif, le procédé comprenant :
l'acquisition (102) d'un attribut de traitement des progiciels d'installation d'application quand il est contrôlé qu'un système d'exploitation est en cours de mise à niveau avec une pluralité de progiciels d'installation d'application, l'attribut de traitement étant un attribut de compilation de mise à niveau ou un attribut de compilation inactive, dans lequel l'attribut de compilation de mise à niveau se réfère à un attribut dans lequel le progiciel d'installation d'application doit être compilé durant la mise à niveau et dans lequel l'attribut de compilation inactive se réfère à un attribut dans lequel le progiciel d'installation d'application ne doit pas être compilé durant la mise à niveau ;
durant la mise à niveau du système d'exploitation, la compilation (104) des progiciels d'installation d'application dont l'attribut de traitement est l'attribut de compilation de mise à niveau ; la détection (209) qu'un progiciel d'installation d'application est un progiciel d'installation d'application qui n'est pas compilé et dont l'attribut de traitement est l'attribut de compilation inactive ; et si le progiciel d'installation d'application est un progiciel d'installation d'application qui n'est pas compilé et dont l'attribut de traitement est l'attribut de compilation inactive, la compilation (211) du progiciel d'installation d'application, et, au terme de la mise à niveau, le lancement de l'installation du progiciel d'installation d'application si un état de fonctionnement actuel de l'appareil satisfait une condition de compilation inactive, la condition de compilation inactive comprenant au moins une des conditions suivantes :
un instant de temps actuel tombe dans une période de temps d'inactivité ;
une puissance actuelle de batterie dépasse un seuil prédéfini ;
un état actuel est un état de charge de batterie ; et
aucun signal de fonctionnement n'est reçu dans une période de temps la plus récente.

2. Procédé selon la revendication 1, dans lequel ladite acquisition (102) d'un attribut de traitement du progiciel d'installation d'application comprend :
la détection (202) individuellement que le progiciel d'installation d'application appartient ou non à une liste de compilation de mise à niveau ;
si le progiciel d'installation d'application n'appartient pas à la liste de compilation de mise à niveau, la détection (204) qu'une période de temps entre le dernier instant d'utilisation du progiciel d'installation d'application et un instant actuel dépasse ou non une période de temps prédéfinie ;
si la période de temps dépasse la période de temps prédéfinie, la détermination que l'attribut de traitement du progiciel d'installation d'application est l'attribut de compilation inactive ; et
si le progiciel d'installation d'application appartient à la liste de compilation de mise à niveau ou si la période de temps ne dépasse pas la période de temps prédéfinie, la détermination que l'attribut de traitement du progiciel d'installation d'application est l'attribut de compilation de mise à niveau.

3. Appareil de traitement de progiciels d'installation d'application, où n est un entier positif, l'appareil comprenant :
un module d'acquisition (420, 520), configuré pour acquérir un attribut de traitement des progiciels d'installation d'application quand il est contrôlé qu'un système d'exploitation est en cours de mise à niveau avec une pluralité de progiciels d'installation d'application, l'attribut de traitement étant un attribut de compilation de mise à niveau ou un attribut de compilation inactive, dans lequel l'attribut de compilation de mise à niveau se réfère à un attribut dans lequel le progiciel d'installation d'application doit être compilé durant la mise à niveau et dans lequel l'attribut de compilation inactive se réfère à un attribut dans lequel le progiciel d'installation d'application ne doit pas être compilé durant la mise à niveau ; et
un module de compilation (440), configuré pour, durant la mise à niveau du système d'exploitation, compiler les progiciels d'installation d'application dont l'attribut de traitement est l'attribut de compilation de mise à niveau, l'appareil comprenant en outre :
un module de détection (554), configuré pour détecter qu'un progiciel d'installation d'application est ou non un progiciel d'installation d'application qui n'est pas compilé et dont l'attribut de traitement est l'attribut de compilation inactive ; et
un module de compilation et lancement (556), configuré pour, quand le progiciel d'installation d'application est un progiciel d'installation d'application qui n'est pas compilé et dont l'attribut de traitement est l'attribut de compilation inactive, compiler le progiciel d'installation d'application, et, au terme de la mise à niveau, lancer l'installation du progiciel d'installation d'application quand la compilation est terminée si un état de fonctionnement actuel de l'appareil satisfait une condition de compilation inactive, la condition de compilation inactive comprenant au moins une des conditions suivantes :
un instant de temps actuel tombe dans une période de temps d'inactivité ;
une puissance actuelle de batterie dépasse un seuil prédéfini ;
un état actuel est un état de charge de batterie ; et
aucun signal de fonctionnement n'est reçu dans une période de temps la plus récente.

4. Appareil selon la revendication 3, dans lequel le module d'acquisition (520) comprend :
un premier sous-module de détection (522), configuré pour détecter individuellement que le progiciel d'installation d'application à compiler appartient ou non à une liste de compilation de mise à niveau ;
un second sous-module de détection (524), configuré pour, quand le progiciel d'installation d'application n'appartient pas à la liste de compilation de mise à niveau, détecter qu'une période de temps entre le dernier instant d'utilisation du progiciel d'installation d'application et un instant actuel dépasse ou non une période de temps prédéfinie ;
un sous-module de détermination d'inactivité (526), configuré pour, quand la période de temps dépasse la période de temps prédéfinie, déterminer que l'attribut de traitement du progiciel d'installation d'application est l'attribut de compilation inactive ; et
un sou-module de détermination de mise à niveau (528), configuré pour, quand le progiciel d'installation d'application appartient à la liste de compilation de mise à niveau ou quand la période de temps ne dépasse pas la période de temps prédéfinie, déterminer que l'attribut de traitement du progiciel d'installation d'application est l'attribut de compilation de mise à niveau.

5. Programme informatique qui, à son exécution sur un processeur d'un appareil, réalise un procédé selon la revendication 1 ou la revendication 2.
